# EUROPEAN PATENT APPLICATION

(11) **EP 2 221 841 A1**
(43) Date of publication of application: **25.08.2010**
(21) Application number: 08857885.1
(22) Date of filing: 14.11.2008
(51) Int. Cl.: H01G 9/058, H01M 4/58

(54) **POSITIVE ELECTRODE MATERIAL FOR NONAQUEOUS LITHIUM-TYPE STORAGE ELEMENT**

(30) Priority: 16.11.2007 JP 2007297747
(71) Applicant: Osaka Gas Company Limited, Osaka-shi Osaka 541-0046 (JP)
(72) Inventor: MABUCHI, Akihiro, Osaka 541-0046 (JP); TSUBATA, Toshio, Shizuoka 416-8501 (JP); SHIMOYAMADA, Michiko, Shizuoka 416-8501 (JP)
(74) Representative: Diehl & Partner GbR
(86) International application number: PCT/JP2008/070741
(87) International publication number: WO 2009/072381

(57) **Abstract**

A positive electrode material of an electricity storage device maintaining a high capacity at a high output density is provided.

In a positive electrode material of a nonaqueous lithium-based electricity storage device comprising a lithium ion storing and desorbing material as a negative electrode active substance, an activated carbon is used for a positive electrode active substance of the positive electrode material and satisfies the following expressions:
0.3<V1≤0.8 and 0.5≤V2≤1.0,
where V1 (cc/g) represents a mesopore volume for a pore having a diameter of 20 Å to 500 Å and V2 (cc/g) represents a micropore volume for a pore having a diameter of less than 20 Å.

## Description

### TECHNICAL FIELD

The present invention relates to a positive electrode material of a nonaqueous lithium-based electricity (or electrical) storage device (or element) having a combination of a high energy density and a high power output.

### BACKGROUND ART

In view of effective energy utilization for purposes of global environment conservation and resource saving, various electricity storage systems have recently attracted interest. Such systems include a peak-off electrical power storage system, a home distributed electricity storage system based on photovoltaic generation technology, an electricity storage system for an electric vehicle, or the like.

A first requirement for these electricity storage systems is that a battery used in the system has a high energy density. Lithium ion batteries have energetically been developed as a major candidate for a high energy density battery which can satisfy such a requirement.

A second requirement for the systems is that the battery used in the systems has a high power output property. For example, in a combination of a high-efficiency engine and an electricity storage system (e. g. , in a hybrid electric vehicle) or in a combination of a fuel cell and an electricity storage system (e.g., in a fuel cell electric vehicle), the battery is required to provide a high power output discharging property to the system at increasing speed.

Currently, an electric double layer capacitor (hereinafter, the electric double layer capacitor is simply referred to as "capacitor" sometimes) which comprises an electrode using an activated carbon has been developed as an electricity storage device having a high power output. The electric double layer capacitor has a high durability (e.g., a cycle property, and a storage stability at high temperature) and a power output property of about 0.5 to 1 kW/L. Such an electric double layer capacitor has been regarded as an optimum device for the above-mentioned fields requiring a high power output. However, the energy density of the capacitor is only about 1 to 5 Wh/L. Accordingly, the power output duration is a bottleneck in a practical application of the capacitor.

Meanwhile, nickel-metal hydride batteries presently used in the hybrid electric vehicle achieve a high power output substantially equal to that of the electric double layer capacitor and have an energy density of about 160 Wh/L. However, studies dealing with improving the stability at high temperature and the durability and with increasing the energy density and the power output further have energetically progressed.

As for the lithium ion battery, the studies dealing with increasing the power output have been continued. For example, a lithium ion battery having a high power output of more than 3 kW/L at of 50% depth of discharge (the term "depth of discharge" means a value representing a state in which how many percent of the discharge capacity of the device (or element) has been discharged) has been developed. However, the above-mentioned lithium ion battery has an energy density of not more than of 100 Wh/L and is designed to reduce reluctantly a high energy density, which is a main feature of the lithium ion battery. Additionally, the above-mentioned lithium ion battery is inferior to the electric double layer capacitor in durability (e.g., a cycle property and a storage property at high temperature). For obtaining a practical durability, the above-mentioned lithium ion battery can be used only in a range of the depth of discharge narrower than a range of 0 to 100%. For that reason, the practical capacity of the battery further decreases. Therefore, the studies dealing with a further improvement in the durability have energetically progressed.

As mentioned above, a practical application of an electricity storage device (or element) having a combination of a high power output, a high energy density, and a durability is strongly desired. So far, an electricity storage device which is called a lithium ion capacitor has actively been developed as an electricity storage device satisfying the technical requirements.

In capacitors, the energy density is in proportion to the capacity and the withstand voltage. The withstand voltage of the electric double layer capacitor is about 2 to 3 V. In an attempt to increase the withstand voltage, a nonaqueous electrolytic solution containing a lithium salt is used as an electrolytic solution. For example, capacitors which comprise an activated carbon for a positive electrode and a negative electrode and a nonaqueous electrolytic solution containing a lithium salt as an electrolytic solution are suggested (see Patent Documents 1, 2, and 3). However, since the activated carbon of the negative electrode has a poor charge and discharge efficiency with respect to lithium ion, the capacitors still have a poor or insufficient cycle property. Moreover, a use of an activated carbon for a positive electrode and a carbonaceous material such as graphite for a negative electrode has been studied (see Patent Documents 4, 5, and 6). However, since the graphite of the negative electrode has poor or insufficient input-output characteristics, the capacitors still have a problem in cycle property, e.g., a tendency to generate a lithium dendrite at conducting a cycle test.

In addition, an electricity storage device in which a positive electrode comprises a hydrocarbon material as a carbonaceous material is suggested, and the hydrocarbon material has an atomic ratio of hydrogen relative to carbon of 0.05 to 0.5, a BET specific surface area of 300 to 2000 m²/g, a mesopore volume of 0.02 to 0.3 ml/g in accordance with BJH method, and a total pore volume of 0.3 to 1.0 ml/g in accordance with MP method (see Patent Document 7). However, the supplementary examinations conducted by the inventors of the present invention revealed that the capacitor has a problem that the power output property is insufficient in spite of having a high capacity.

Meanwhile, a negative electrode material of an electricity storage device (or element) which is a carbonaceous material comprising an activated carbon and a carbonaceous component deposited on a surface of the activated carbon is suggested as a negative electrode material storing (or absorbing) and releasing lithium ion, and the carbonaceous material satisfies the following expressions: 0.01≤Vm1≤0.20 and 0.01≤Vm2≤0.40, where Vm1 (cc/g) represents a mesopore volume for a pore having a diameter of 20 Å to 500 Å and Vm2 (cc/g) represents a micropore volume for a pore having a diameter of less than 20 Å (see Patent Document 8). The above-mentioned negative electrode material has a high charge and discharge efficiency with respect to lithium ion and an excellent power output property.
[Patent Document 1] JP-11-121285A
[Patent Document 2] JP-11-297578A
[Patent Document 3] JP-2000-124081A
[Patent Document 4] JP-60-182670A
[Patent Document 5] JP-08-107048A
[Patent Document 6] JP-10-027733A
[Patent Document 7] JP-2005-093778A
[Patent Document 8] JP-2003-346801A

### DISCLOSURE OF THE INVENTION

### PROBLEMS TO BE SOLVED BY THE INVENTION

It is an object of the present invention to provide a positive electrode material of an electricity storage device (or element) maintaining a high capacity at a high power density.

### MEANS TO SOLVE THE PROBLEMS

The inventors of the present invention made extensive studies on positive electrode active substances (or active materials) including an activated carbon having a pore structure described in Patent Document 7 in order to improve or enhance the power output property of an electricity storage device (or element) disclosed in Patent Document 8. Finally, the inventors found that a use of an activated carbon having a specific pore structure for a positive electrode can greatly improve or enhance the power output property of the electricity storage device while maintaining the energy density at the substantially same level as the electricity storage device described in Patent Document 8.

That is, the present invention provides the following positive electrode materials of a nonaqueous lithium-based electricity storage device:
1. A positive electrode material of a nonaqueous lithium-based electricity storage device comprising a material storing (or absorbing) and releasing lithium ion for a negative electrode, comprising an activated carbon (or an active carbon) as a positive electrode active substance of the positive electrode material, wherein the activated carbon satisfies the following expressions:
   0.3≤V1≤0.8 and 0.5≤V2≤1.0,
      where V1 (cc/g) represents a mesopore volume for a pore having a diameter of 20 Å to 500 Å and V2 (cc/g) represents a micropore volume for a pore having a diameter of less than 20 Å;
2. A positive electrode material according to the item 1, wherein the activated carbon as the positive electrode active substance satisfies the following expression:
   0.3≤V1/V2≤0.9,
      where V1 (cc/g) represents a mesopore volume for a pore having a diameter of 20 Å to 500 Å and V2 (cc/g) represents a micropore volume for a pore having a diameter of less than 20 Å;
3. A nonaqueous lithium-based electricity storage device according to the item 1 or 2, wherein the activated carbon as the positive electrode active substance has a mean pore size (or pore diameter) of 17 Å to 25 Å; and
4. A positive electrode material according to any one of the items 1 to 3, wherein the activated carbon as the positive electrode active substance has a BET specific surface area of 1500 m²/g to 3000 m²/g_{.}

### EFFECTS OF THE INVENTION

A use of the positive electrode material of the present invention for a nonaqueous lithium-based electricity storage device (or element) advantageously allows the electricity storage device to maintain a higher capacity more than a conventional battery or capacitor does at a high power density.

### BRIEF DESCRIPTION OF DRAWINGS

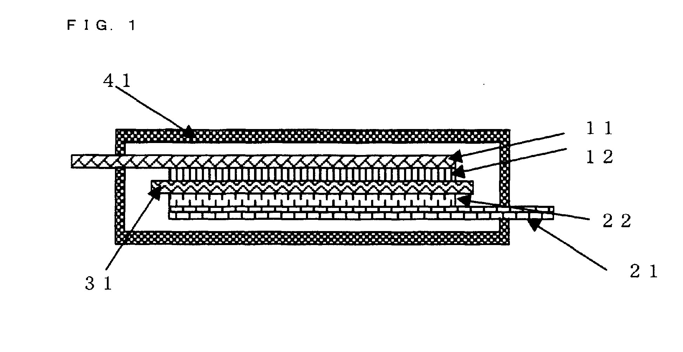

[Fig.1] Fig.1 represents an example of a cross sectional view of an electricity storage device (or element) comprising the positive electrode active substance of the positive electrode material of the present invention.

### DETAILED DESCRIPTION OF THE INVENTION

Hereinafter, an embodiment of the present invention will be illustrated in detail.

The positive electrode active substance (or positive electrode active material) of the present invention, of an electricity storage device (or element), comprises an activated carbon (or an active carbon) having a pore, and according to a first aspect of the present invention, the activated carbon satisfies the expressions: 0 . 3<V1≤0.8 and 0.5≤V2≤1.0, where V1 (cc/g) represents a mesopore volume for a pore having a diameter of 20 Å to 500 Å and V2 (cc/g) represents a micropore volume for a pore having a diameter of less than 20 Å. In addition to the requirement of the first aspect, according to a second aspect of the present invention, the activated carbon satisfies the following expression: 0.3≤V1/V2≤0.9. In addition to the requirement of the first or second aspect, according to a third aspect of the present invention, the activated carbon has a mean pore size (ormean pore diameter) of 17 Å to 25 Å. In addition to any one of the requirements of the first to third aspects, according to a forth aspect of the present invention, the activated carbon has a BET specific surface area of 1500 m²/g to 2500 m²/g_{.}

A carbonaceous material used as a raw material of the activated carbon is not particularly limited to a specific one as long as the carbonaceous material is a carbon resource usually employed as a raw material of an activated carbon. The examples of the carbonaceous material include a plant-derived raw material (e.g., a lumber or wood, a wood flour, a palm husk or shell, a by-product from a pulp production, a bagass, and a molasses); a fossil-derived raw material (e.g., a peat or turf, a lignite, a brown coal, a bituminous (or pitch) coal, an anthracite coal, a petroleum distillation residue, a petroleum pitch, a coke, and a coal tar); a variety of synthetic resin (e.g. , a phenolic resin, a vinyl chloride resin, a vinyl acetate resin, a melamine resin, a urea resin, a resorcinol resin, a celluloid, an epoxy resin, a polyurethane resin, a polyester resin, and a polyamide resin) ; a synthetic rubber (e.g., a polybutylene, a polybutadiene, and a polychloroprene); a synthetic wood; and a synthetic pulp; or a carbide thereof. Among these raw materials, the plant-derived raw material (such as a palm husk or a wood flour) or a carbide thereof is preferred. The particularly preferred one is a carbide of a palm husk.

A known carbonization or activation method (for example, a fixed bed method, a moving bed method, a fluidized bed method, a slurry method, and a rotary kiln method) can be employed as a carbonization or activation method of the raw material of the activated carbon.

The carbonization method of the raw material may include a carbonization method which comprises burning (or baking) the raw material at about 400 to 700°C (particularly about 450 to 600°C) for about 30 minutes to 10 hours by using an inert or inactive gas (e.g., nitrogen, carbon dioxide, helium, argon, xenon, neon, carbon monoxide, and an exhaust combustion gas) or a mixed gas comprising such an inert or inactive gas as a main component and other gases.

The activation method of the raw material of the activated carbon may include, for example, a gas activation method which comprises burning the raw material by using an activation gas (e.g., a water vapor or steam, carbon dioxide, and oxygen). The preferred activation gas includes a water vapor or steam or carbon dioxide.

In this activation method, it is preferred that the activation be conducted by increasing or raising a temperature from the carbonization temperature to a range of 800 to 1000°C over 3 to 12 hours (preferably 5 to 11 hours, more preferably 6 to 10 hours) with feeding the activation gas at a rate of 0.5 to 3.0 kg/h (particularly 0.7 to 2.0 kg/h).

Moreover, prior to the above-mentioned activation treatment, the raw material of the activated carbon may be subjected to a primary activation. In the primary activation, the carbonaceous material may usually be gas activated by burning the carbonaceous material at a temperature of lower than 900°C with a use of the activation gas such as a water vapor or steam, carbon dioxide, or oxygen.

The burning temperature and time of the above-mentioned carbonization method, and the activation gas feed amount, heating rate, and the highest activation temperature of the activation method are suitably combined, whereby the activated carbon, of the present invention, having the characteristics described below can be produced.

According to the present invention, the activated carbon obtained by the above-mentioned manner has the characteristics as follows.

That is, when V1 (cc/g) represents a mesopore volume for a pore having a diameter of 20 Å to 500 Å and V2 (cc/g) represents a micropore volume for a pore having a diameter of less than 20 Å, the activated carbon satisfies the following expressions: 0.3<V1≤0.8 and 0.5≤V2≤1.0. As shown in Examples described later, the mesopore volume V1 and the micropore volume V2 can be increased by prolonging a time required to reach the highest activation temperature in the activation method.

It is preferred that the mesopore volume V1 be more than 0.3 g/cc from the viewpoint of increasing the power output property of the electricity storage device comprising an positive electrode containing the activated carbon. It is also preferred that the mesopore volume V1 be not more than 0.8 in view of suppressing a reduction in the capacity of the above electricity storage device. The more preferred mesopore volume V1 is 0.35 g/cc to 0.7 g/cc, and the more particularly preferred mesopore volume V1 is more than 0.4 g/cc but not more than 0.6 g/cc.

Meanwhile, for increasing a high capacity of the electricity storage device by increasing the specific surface area of the activated carbon, it is preferred that the micropore volume V2 be not less than 0.5 g/cc. Moreover, the capacity per unit volume is increased by decreasing the volume (or bulkiness) of the activated carbon and increasing the density as an electrode, and in this respect it is preferred that the micropore volume V2 be not more than 1.0 g/cc. The micropore volume V2 is more preferably 0.6 g/cc to 1.0 g/cc, and further preferably 0.8 g/cc to 1.0 g/cc. The ratio of the mesopore volume V1 relative to the micropore volume V2 preferably ranges as follows:
0.3≤V1/V2≤0.9. That is, it is preferred that the ratio (V1/V2) be not less than 0.3 since a reduction in the power output property is suppressed while retaining a capacity when the mesopore volume is larger than the micropore volume;
and it is also preferred that the ratio (V1/V2) be not more than 0.9 since a reduction in the capacity is suppressed while retaining the power output property when the micropore volume is larger than the mesopore volume. The more preferred range thereof is 0.4≤V1/V2≤0.7. The more particularly preferred range thereof is 0.55≤V1/V2≤0.7.

Moreover, in view of maximizing the power output, the activated carbon of the positive electrode active substance of the electricity storage device according to the present invention has a mean pore size of not less than 17Å, more preferably not less than 18Å, and more particularly preferably not less than 20 Å. Additionally, in view of maximizing the capacity, the activated carbon preferably has a mean pore size of not more than 25 Å. In the present invention, the term "mean pore size (or mean pore diameter)" is determined by dividing a total pore volume per weight by a BET specific surface area, and the total pore volume per weight is obtained by measuring each equilibrium absorption of nitrogen gas under each relative pressure at a liquid nitrogen temperature.

Furthermore, the activated carbon of a positive electrode active substance of an electricity storage device according to the present invention preferably has a BET specific surface area of 1500 m²/g to 3000 m²/g and more preferably 1500 m²/g to 2500 m²/g_{.}

A raw material of a negative electrode active substance used for an electricity storage device which comprises the positive electrode active substance of the present invention may include a material storing and releasing lithium ion, e.g., a carbonaceous material, a lithium-titanium compound oxide, and a conductive polymer. The preferred raw material may include a carbonaceous material such as a non-graphitizable(hardly graphitizable) carbon, a graphitizable (easily graphitizable) carbon, or a composite porous material recited in Patent Document 8. The more preferred raw material includes a composite porous material comprising an activated carbon and a carbonaceous component adhering to (or deposited on) a surface of the activated carbon. It is more particularly preferred that a carbonaceous material satisfying the following expressions be used as the raw material: 0.01≤Vm1≤0.20 and 0.01≤Vm2≤0.40, where Vm1 (cc/g) represents amesopore volume for a pore having a diameter of 20 Å to 500 Å and Vm2 (cc/g) represents a micropore volume for a pore having a diameter of less than 20 Å. Such a carbonaceous material can be produced by the following method disclosed in Patent Document 8.

That is, the above-mentioned carbonaceous material can be obtained by heat-treating the activated carbon and a carbonaceous component precursor in the coexistent state of the activated carbon and the precursor.

In this method, a source material of the activated carbon which is used as the raw material of the carbonaceous material is not particularly limited to a specific one as long as the composite porous material obtained by the above-mentioned manner shows desired properties. A commercially available product obtained from a variety of raw materials (such as an petroleum-derived raw material, a coal-derived raw material, a plant-derived raw material, and a polymer-derived raw material) may be used as the source material of the activated carbon. It is preferred that an activated carbon powder having a mean particle size (particle diameter) of about 1 to 500 µm (more preferably about 1 to 50 µm) be used as the activated carbon.

Moreover, the carbonaceous component precursor may include an organic material which is soluble in a liquid or solvent and deposits the carbonaceous component on the activated carbon by the heating treatment. The examples of the precursor for the carbonaceous component may include a pitch, a mesocarbon microbead, a coke, or a synthetic resin such as a phenolic resin. Among these carbonaceous component precursors, a pitch, which is inexpensive, is preferably used to reduce the production cost. The pitch is roughly classified into a petroleum-derived pitch and a coal-derived pitch. Examples of the petroleum-derived pitch include a petroleum distillation residue, a residue obtained by a fluid catalytic cracking (e.g., a decant oil), a bottom oil from a thermal cracker, and an ethylene tar obtained in a naphtha cracking.

For using the above-mentioned pitch, the composite porous material is obtained by allowing a volatile component or thermal decomposition component of the pitch to react thermally on a surface of the activated carbon to deposit the carbonaceous component on a surface of the activated carbon. In this case, the deposition of the volatile component or thermal decomposition component of the pitch to or on a pore surface of the activated carbon proceeds at a temperature of about 200 to 500°C, and a reaction in which the volatile or thermal decomposition component deposited on the surface becomes the carbonaceous component proceeds at not lower than 400°C. The peak temperature of the heating treatment is suitably selected depending on the properties of the composite porous material to be obtained, a pattern of the thermal reaction (decomposition), an atmosphere of the thermal reaction (decomposition), or the like. The peak temperature is preferably not lower than 400°C, more preferably about 450 to 1000°C, and particularly preferably about 500 to 800°C. The period of time to keep the peak temperature at the heat-treatment may be about 30 minutes to 10 hours, preferably about 1 hour to 7 hours, and more preferably about 2 hours to 5 hours. When conducting the heating treatment under the condition that the peak temperature is about 500 to 800°C and kept for 2 hours to 5 hours, it is probably that the carbonaceous component deposited on the surface of the activated carbon becomes a polycyclic aromatic hydrocarbon.

In the present invention, the micropore volume and the mesopore volume are the values obtained by the following methods. That is, a sample is subjected to a vacuum drying at 500°C for one day and night, and the adsorption-desorption isotherm of the sample is measured by using nitrogen as an adsorbate. Using the desorption isotherm, the micropore volume and the mesopore volume are calculated by MP method and BJH method, respectively. MP method means a method for determining distributions of micropore volume, micropore area, and micropore by using "t-plot" (B.C.Lippens, J.H.de Boer, J.Catalysis, 4319 (1965)) and was contrived by M.Mikhail, Brunauer, and Bodor (R.S.Mikhail, S.Brunauer, E.E.Bodor, J.Colloid Interface Sci., 26, 45 (1968)). The BJH method is a method of calculation generally used in analysis of mesopore and was proposed by Barrett, Joyner, and Halenda, et al. (E. P. Barrett, L. G. Joyner and P. Halenda, J.Amer.Chem.Soc., 73,373 (1951)).

The above-mentioned positive electrode active substance and negative electrode active substance may independently be molded into an electrode by a known method or technique. Thereafter, the obtained electrodes may be used as parts or components constituting the nonaqueous lithium-based electricity storage device which comprises, in combination, a nonaqueous electrolytic solution containing a lithium salt and a positive electrode comprising an activated carbon.

The method or technique for molding the electrode may include a well known method or technique for producing an electrode of a lithium ion battery, a capacitor, or the like. For example, an electrode can be obtained by applying an active substance layer on a metal as a collector with a use of a solution containing an organic solvent and a resin as a binder, drying the resulting matter, and, if necessary, pressing the dried matter. Moreover, according to need, the active substance layer may further contain a fine particle graphite, an acetylene black, a ketjen black, a vapor grown carbon fiber in addition to the active substance.

The molded positive electrode and negative electrode are laminated on each other (or laminated on each other and rolled) with interposing a separator therebetween. The resulting laminate is then inserted into or enclosed in a can or an outer case or container formed from a laminate film. The separator to be used may include a polyethylene or polypropylene microporous membrane used for a lithium ion secondary battery or a cellulosic nonwoven fabric or paper used for an electric double layer capacitor. The thickness of the separator is preferably not less than 10 µm in view of reducing a self-discharge due to an internal micro short-circuit. Moreover, the thickness of the separator is preferably not more than 50 µm in view of maximizing the energy density of the electricity storage device and suppressing a reduction in the power output property.

The solvent for the nonaqueous electrolytic solution to be used for the electricity storage device comprising the positive electrode active substance of the present invention may include, e.g. , a cyclic carbonic acid ester as typified by ethylene carbonate (EC) or propylene carbonate (PC), a chain carbonic acid ester as typified by diethyl carbonate (DEC), dimethyl carbonate (DMC), or methyl ethyl carbonate (MEC), a lactone such as γ-butyrolactone (γ BL), and a mixed solvent thereof.

It is necessary that an electrolyte soluble in these solvents be a lithium salt. The preferred lithium salt may include, e.g., LiBF₄, LiPF₆, LiN(SO₂C₂F₅)₂, LiN(SO₂CF₃)(SO₂C₂F₅), LiN(SO₂CF₃)(SO₂C₂F₄H), and a mixed salt of thereof. The concentration of the electrolyte in the nonaqueous electrolytic solution is preferably not less than 0.5 mol/L in view of suppressing or preventing a reduction in the capacity of the electricity storage device due to a shortage of a negative ion. Moreover, a precipitation of the undissolved salt in the electrolytic solution or an exceeding increase in the viscosity of the electrolytic solution disadvantageously reduces the conductivity, thereby reducing the power output property. From the viewpoint of suppressing such a reduction in the power output property, it is preferred that the concentration of the electrolyte in the nonaqueous electrolytic solution be not more than 2.0 mol/L.

The negative electrode used for the nonaqueous lithium-based electricity storage device comprising the positive electrode active substance of the present invention can be predoped with lithium. The predoping of the negative electrode with lithium can control the capacity and operating voltage of the device.

### INDUSTRIAL APPLICABILITY

The electricity storage device (or element) comprising the positive electrode active substance of the present invention can advantageously be used, in a vehicle, for a field of a hybrid driving system comprising a motor, an electricity storage device (or element), and an internal-combustion engine or a fuel cell in combination, and for assisting in meeting an instantaneous peak power, or the like.

### EXAMPLES

Hereinafter, Examples and Comparative Examples are shown to clear the characteristics of the present invention further.

### [Example 1]

A crushed carbide of a palm husk was carbonized at 500°C in nitrogen in a small-size carbonizing furnace. Thereafter, instead of nitrogen, a water vapor which had been heated in a preheating furnace was introduced into the carbonizing furnace at a rate of 1 kg/h with keeping a heated state thereof, and the temperature of the carbonizing furnace was raised to 900°C over 8 hours. Then, the obtained product was removed from the carbonizing furnace and cooled under an atmosphere of nitrogen to give an activated carbon. The resulting activated carbon was washed with flowing water for 10 hours and then drained. Thereafter, the activated carbon was dried in an electric dryer with keeping a temperature at 115°C for 10 hours, and the dried activated carbon was ground with a ball mill for 1 hour to obtain a ground or pulverized activated carbon to be used as a positive electrode material.

The pore distribution of the ground activated carbon was measured with a porosimetry analyzer (AUTOSORB-1 AS-1-MP) manufactured by Yuasa Ionics Inc. The results showed that the BET specific surface area was 2360 m²/g, the mesopore volume (V1) was 0.52 cc/g, the micropore volume (V2) was 0.88 cc/g, the ratio (V1/V2) was 0.59, and the mean pore size was 22.9 Å. Using this ground activated carbon as a positive electrode active substance, a positive electrode was prepared in the following manner: 83.4 parts by weight of the ground activated carbon, 8.3 parts by weight of acetylene black, 8.3 parts by weight of a PVDF (poly(vinylidene fluoride)), and NMP (N-methyl-pyrrolidone) were mixed to give a slurry; and the obtained slurry was applied on one side of an aluminum foil having a thickness of 15 µm, dried, and pressed to obtain a positive electrode having a thickness of 60 µm.

Moreover, a crushed carbide of a palm husk was carbonized at 500°C in nitrogen in a small-size carbonizing furnace. Thereafter, instead of nitrogen, a water vapor which had been heated in a preheating furnace was introduced into the carbonizing furnace at a rate of 2 kg/h with keeping a heated state thereof, and the temperature of the carbonizing furnace was raised to 900°C over 4 hours. Then, the obtained product was removed from the furnace and cooled under an atmosphere of nitrogen. By the activation process, an activated carbon was obtained. The resulting activated carbon was washed with flowing water for 10 hours and then drained. Thereafter, the activated carbon was dried in an electric dryer with keeping a temperature at 115°C for 10 hours, and the dried activated carbon was ground with a ball mill for 1 hour to obtain a ground activated carbon.

The pore distribution of the ground activated carbon was measured with a porosimetry analyzer (AUTOSORB-1 AS-1-MP) manufactured by Yuasa Ionics Inc. The results showed that the BET specific surface area was 1620 m²/g, the mesopore volume (V1) was 0.18 cc/g, the micropore volume (V2) was 0.67 cc/g, the ratio (V1/V2) was 0.27, and the mean pore size was 20.7 Å. In a stainless-steel mesh basket, 150 g of the ground activated carbon was placed, and the basket was placed on a stainless-steel tray in which 300 g of a coal-based pitch (softening point: 80°C) was placed. The basket on the tray was put in an electric furnace (the usable inside dimension of the furnace of 300 mm in length, 300 mm in width, and 300 mm in depth), and a thermal reaction was conducted. In the heating treatment, the temperature was raised to 670°C over 4 hours under an atmosphere of nitrogen, the raised temperature was kept for 4 hours, and subsequently, the obtained product was allowed to cool to 60°C spontaneously and then removed from the electric furnace.

The obtained product (hereinafter referred to as "the composite porous material") had a BET specific surface area of 255 m²/g and a weight of 236.6 g. Since the weight of the composite porous material increased by 57.7% compared to that of the activated carbon as a raw material, the composite ratio was calculated as 0.577. Moreover, the mesopore volume (Vm1) of the composite porous material was 0.0656 cc/g and the micropore volume (Vm2) thereof was 0.107 cc/g.

Then, 83.4 parts by weight of the composite porous material obtained by the above-mentioned manner, 8.3 parts by weight of acetylene black, 8.3 parts by weight of a PVDF (poly(vinylidene fluoride)), and NMP (N-methyl-pyrrolidone) were mixed to give a slurry.

Subsequently, the obtained slurry was applied on one side of a copper foil having a thickness of 14 µm, dried, and pressed to give a negative electrode having a thickness of 40 µm.

The positive and negative electrodes obtained by the above-mentioned manner were independently cut to produce a plate having an area of 2 cm². The active substance-containing surface of the positive electrode plate and that of the negative electrode plate were faced each other with a nonwoven fabric separator having a thickness of 30 µm therebetween, and the obtained laminate was enclosed in a container comprising a laminate sheet formed from a polypropylene and aluminum to assemble a nonaqueous lithium-based electricity storage device. Incidentally, the negative electrode was electrochemically predoped with lithium ions at an amount corresponding to 700 mAh/g per material weight using a lithium metal; and a solution comprising a mixed solvent containing ethylene carbonate and diethyl carbonate at a weight ratio of 3/7 and LiPF₆ dissolved in the mixed solvent at a concentration of 1 mol/L was used as an electrolytic solution.

Using a charging-discharging apparatus (ACD-01) manufactured by ASKA Electronic Co., LTD., the prepared electricity storage device was subjected to a constant-current and constant-voltage charge for total 8 hours. That is, the electricity storage device was charged to 4.0 V at a current of 1 mA, and then a constant voltage of 4.0 V was applied on the device. Subsequently, the electricity storage device was discharged to 2.0 V at a constant current of 1 mA. The discharge capacity was 0.42 mAh. Next, the electricity storage device was charged in the same manner and discharged to 2.0 V at a current of 250 mA to give a capacity of 0.27 mAh. That is, the ratio of the discharge capacity at a current of 250 mA relative to that at a current of 1 mA was 0.64.

### [Comparative Example 1]

Except using the ground activated carbon used as the raw material of the composite porous material described in Example 1 directly as a positive electrode active substance, in the same manner as in Example 1 a nonaqueous lithium-based electricity storage device was prepared. Incidentally, the above-mentioned ground activated carbon had a BET specific surface area of 1620 m²/g, a mesopore volume (V1) of 0.18 cc/g, a micropore volume (V2) of 0.67 cc/g, a ratio (V1/V2) of 0.27, and a mean pore size of 20.7 Å.

The prepared electricity storage device was subjected to a constant-current and constant-voltage charge for total 8 hours. That is, the electricity storage device was charged to 4.0 V at a current of 1 mA, and then a constant voltage of 4.0 V was applied on the device. Subsequently, the electricity storage device was discharged to 2.0 V at a constant current of 1 mA. The discharge capacity was 0.39 mAh. Next, the electricity storage device was charged in the same manner and discharged to 2.0 V at a current of 250 mA to give a capacity of 0.17 mAh. That is, the ratio of the discharge capacity at a current of 250 mA relative to that at a current of 1 mA was 0.44.

### [Example 2]

A crushed carbide of a palm husk was carbonized at 500°C in nitrogen in a small-size carbonizing furnace. Thereafter, instead of nitrogen, a water vapor which had been heated in a preheating furnace was introduced into the carbonizing furnace at a rate of 1 kg/h with keeping a heated state thereof, and the temperature of the carbonizing furnace was raised to 900°C over 10 hours. Then, the obtained product was removed from the carbonizing furnace and cooled under an atmosphere of nitrogen to give an activated carbon. The resulting activated carbon was washed with flowing water for 10 hours and then drained. Thereafter, the activated carbon was dried in an electric dryer with keeping a temperature at 115°C for 10 hours, the dried activated carbon was ground with a ball mill for 1 hour to obtain a ground activated carbon to be used as a positive electrode material.

The pore distribution of the ground activated carbon was measured with a porosimetry analyzer (AUTOSORB-1 AS-1-MP) manufactured by Yuasa Ionics Inc. The results showed that the BET specific surface area was 2700 m²/g, the mesopore volume (V1) was 0.63 cc/g, the micropore volume (V2) was 0.92 cc/g, the ratio of (V1/V2) was 0.68, and the mean pore size was 20.3 Å. Except using this ground activated carbon as a positive electrode active substance, in the same manner as in Example 1, a positive electrode and a negative electrode were prepared, and a nonaqueous lithium-based electricity storage device was produced.

The prepared electricity storage device was subjected to a constant-current and constant-voltage charge for total 8 hours. That is, the electricity storage device was charged to 4.0 V at a current of 1 mA, and a constant voltage of 4.0 V was applied on the device. Subsequently, the electricity storage device was discharged to 2.0 V at a constant current of 1 mA. The discharge capacity was 0.47 mAh. Next, the electricity storage device was charged in the same manner and discharged to 2.0 V at a current of 250 mA to give a capacity of 0.29 mAh. That is, the ratio of the discharge capacity at a current of 250 mA relative to that at a current of 1 mA was 0.62.

### [Example 3]

A crushed carbide of a palm husk was carbonized at 500°C in nitrogen in a small-size carbonizing furnace. Thereafter, instead of nitrogen, a water vapor which had been heated in a preheating furnace was introduced into the carbonizing furnace at a rate of 1 kg/h with keeping a heated state thereof, and the temperature of the carbonizing furnace was raised to 900°C over 6 hours. Then, the obtained product was removed from the carbonizing furnace and cooled under an atmosphere of nitrogen to give an activated carbon. The resulting activated carbon was washed with flowing water for 10 hours and then drained. Thereafter the activated carbon was dried in an electric dryer with keeping a temperature at 115°C for 10 hours, the dried activated carbon was ground with a ball mill for 1 hour to obtain a ground activated carbon to be used as a positive electrode material.

The pore distribution of the ground activated carbon was measured with a porosimetry analyzer (AUTOSORB-1 AS-1-MP) manufactured by Yuasa Ionics Inc. The results showed that the BET specific surface area was 1700 m²/g, the mesopore volume (V1) was 0.35 cc/g, the micropore volume (V2) was 0.68 cc/g, the ratio (V1/V2) was 0.52, and the mean pore size was 21.6 Å. Except using this ground activated carbon as a positive electrode active substance, in the same manner as in Example 1 a positive electrode and a negative electrode were prepared, and a nonaqueous lithium-based electricity storage device was produced.

The prepared electricity storage device was subjected to a constant-current and constant-voltage charge for total 8 hours. That is, the electricity storage device was charged to 4.0 V at a current of 1 mA, and a constant voltage of 4.0 V was applied on the device. Subsequently, the electricity storage device was then discharged to 2.0 V at a constant current of 1 mA. The discharge capacity was 0.40 mAh. Next, the electricity storage device was charged in the same manner and was discharged to 2.0 V at a current of 250 mA to give a capacity of 0.21 mAh. That is, the ratio of the discharge capacity at a current of 250 mA relative to that at a current of 1 mA was 0.53.

### [Example 4]

A crushed carbide of a palm husk was carbonized at 500°C in nitrogen in a small-size carbonizing furnace. Thereafter, instead of nitrogen, a water vapor which had been heated in a preheating furnace was introduced into the carbonizing furnace at a rate of 1 kg/h with keeping a heated state thereof, and the temperature of the carbonizing furnace was raised to 900°C over 7 hours. Then, the obtained product was removed from the carbonizing furnace and cooled under an atmosphere of nitrogen to give an activated carbon. The resulting activated carbon was washed with flowing water for 10 hours and then drained. Thereafter the activated carbon was dried in an electric dryer with keeping a temperature at 115°C for 10 hours, the dried activated carbon was ground with a ball mill for 1 hour to obtain a ground activated carbon to be used as a positive electrode material.

The pore distribution of the ground activated carbon was measured with a porosimetry analyzer (AUTOSORB-1 AS-1-MP) manufactured by Yuasa Ionics Inc. The results showed that the BET specific surface area was 2050 m²/g, the mesopore volume (V1) was 0.46 cc/g, the micropore volume (V2) was 0.77 cc/g, the ratio (V1/V2) was 0.60, and the mean pore size was 20.9 Å. Except using this ground activated carbon as a positive electrode active substance, in the same manner as in Example 1, a positive electrode and a negative electrode were prepared, and a nonaqueous lithium-based electricity storage device was produced.

The prepared electricity storage device was subjected to a constant-current and constant-voltage charge for total 8 hours. That is, the electricity storage device was charged to 4. 0 V at a current of 1 mA, and then a constant voltage of 4.0 V was applied on the device. Subsequently, the electricity storage device was discharged to 2.0 V at a constant current of 1 mA. The discharge capacity was 0.44 mAh. Next, the electricity storage device was charged in the same manner and then discharged to 2.0 V at a current of 250 mA to give a capacity of 0.25 mAh. That is, the ratio of the discharge capacity at a current of 250 mA relative to that at a current of 1 mA was 0.57.

### [Comparative Example 2]

Expect using a commercially available pitch-based activated carbon (the BET specific surface area was 2300 m²/g, the mesopore volume (V1) was 0.11 cc/g, the micropore volume (V2) was 0.95 cc/g, the ratio (V1/V2) was 0.12, and the mean pore size was 17.6 Å) as an activated carbon of a positive electrode active substance for a positive electrode, in the same manner as in Example 1, a positive electrode and a negative electrode were prepared, and a nonaqueous lithium-based electricity storage device was produced.

The prepared electricity storage device was subjected to a constant-current and constant-voltage charge for total 8 hours. That is, the electricity storage device was charged to 4.0 V at a current of 1 mA, and then a constant voltage of 4.0 V was applied on the device. Subsequently, the electricity storage device was discharged to 2.0 V at a constant current of 1 mA. The discharge capacity was 0. 48 mAh. Next, the electricity storage device was charged in the same manner and then discharged to 2.0 V at a current of 250 mA to give a capacity of 0.15 mAh. That is, the ratio of the discharge capacity at a current of 250 mA relative to that at a current of 1 mA was 0.32.

### [Comparative Example 3]

Expect using a commercially available pitch-based activated carbon (the BET specific surface area was 1960 m²/g, the mesopore volume (V1) was 0.14 cc/g, the micropore volume (V2) was 0.78 cc/g, the ratio (V1/V2) was 0.18, and the mean pore size was 18.7 Å) was used as an activated carbon of a positive electrode active substance for a positive electrode, in the same manner as in Example 1, a positive electrode and a negative electrode were prepared, a nonaqueous lithium-based electricity storage device was produced.

The prepared electricity storage device was subjected to a constant-current and constant-voltage charge for total 8 hours. That is, the electricity storage device was charged to 4.0 V at a current of 1 mA, and then a constant voltage of 4.0 V was applied on the device. Subsequently, the electricity storage device was discharged to 2.0 V at a constant current of 1 mA. The discharge capacity was 0.49 mAh. Next, the electricity storage device was charged in the same manner and was discharged to 20 V at a current of 250 mA to give a capacity of 0.22 mAh. That is, the ratio of the discharge capacity at a current of 250 mA relative to that at a current of 1 mA was 0.45.

The above-mentioned results are summarized in Table 1. (Incidentally, in Table 1, the above-mentioned ratio of discharge capacity is denoted in the term "capacity maintenance ratio (%) at 250 mA").

[Table 1]

**Table 1**

| | Examples | | | | Comparative Examples | | |
|---|---|---|---|---|---|---|---|
| | 1 | 2 | 3 | 4 | 1 | 2 | 3 |
| Mesopore volume (V1) (cc/g) of activated carbon used for positive electrode active substance | 0.52 | 0.63 | 0.35 | 0.46 | 0.18 | 0.11 | 0.14 |
| Micropore volume (V2) (cc/g) of activated carbon used for positive electrode active substance | 0.88 | 0.92 | 0.68 | 0.77 | 0.67 | 0.95 | 0.78 |
| V1/V2 | 0.59 | 0.68 | 0.52 | 0.60 | 0.27 | 0.12 | 0.18 |
| Capacity maintenance ratio (%) at 250 mA | 64 | 62 | 53 | 57 | 44 | 32 | 45 |

## Claims

1. A positive electrode material of a nonaqueous lithium-based electricity storage device comprising a material storing and releasing lithium ion for a negative electrode active substance, comprising an activated carbon as a positive electrode active substance of the positive electrode material, wherein the activated carbon satisfies the following expressions:
0.3<V1≤0.8 and 0.5≤V2≤1.0,
where V1 (cc/g) represents a mesopore volume for a pore having a diameter of 20 Å to 500 Å and V2 (cc/g) represents a micropore volume for a pore having a diameter of less than 20 Å.

2. A positive electrode material according to claim 1, wherein the activated carbon satisfies the following expressions:
0.3≤V1/V2≤0.9,
where V1 (cc/g) represents a mesopore volume for a pore having a diameter of 20 Å to 500 Å and V2 (cc/g) represents a micropore volume for a pore having a diameter of less than 20 Å.

3. A positive electrode material according to claim 1 or 2, wherein the activated carbon as the positive electrode active substance has a mean pore size of 17 Å to 25 Å.

4. A positive electrode material according to any one of claims 1 to 3, wherein the activated carbon as the positive electrode active substance has a BET specific surface area of 1500 m²/g to 3000 m²/g.
